# EUROPÄISCHE PATENTSCHRIFT

(11) **EP 1 263 546 B1**
(45) Veröffentlichungstag und Bekanntmachung des Hinweises auf die Patenterteilung: **04.05.2005**
(21) Anmeldenummer: 01915182.8
(22) Anmeldetag: 01.02.2001
(51) Int. Cl.: B23Q 1/58, F16C 29/02, F16C 29/04, F16C 25/06, F15B 15/14, F15B 15/24, B23Q 1/26

(54) **LINEARANTRIEBSEINHEIT**
LINEAR DRIVE UNIT
UNITE D'ENTRAINEMENT LINEAIRE

(30) Priorität: 17.03.2000 DE 10013195
(43) Veröffentlichungstag der Anmeldung: 11.12.2002
(73) Patentinhaber: Festo Ag & Co., 73734 Esslingen (DE)
(72) Erfinder: FEYRER, Thomas, 73732 Esslingen (DE)
(74) Vertreter: Abel, Martin, Dipl.-Ing.
(86) Internationale Anmeldenummer: PCT/EP2001/001073
(87) Internationale Veröffentlichungsnummer: WO 2001/068315

(56) Entgegenhaltungen:
- EP-A- 0 533 922
- EP-A- 0 603 459
- EP-A- 0 698 744
- EP-A- 0 704 275
- DE-A- 4 230 781
- DE-A- 4 242 601
- DE-U- 29 710 935
- FR-A- 1 552 415
- GB-A- 2 178 983
- US-A- 3 994 539
- US-A- 4 701 058
- US-A- 5 328 269

## Beschreibung

Die Erfindung betrifft eine Linearantriebseinheit gemäß dem Oberbegriff des unabhängigen Anspruchs 1.

Bei einer aus der EP 0 603 459 A2 bekannten Linearantriebseinheit ist der schlittenartig ausgebildete erste Basiskörper mit seinem U-förmigen Profilteil auf die Oberseite des Antriebsgehäuses des zweiten Basiskörpers aufgesetzt und umgreift dabei eine an der Oberseite des Antriebsgehäuses montierte Führungsschiene. Im Basiskörper sind zwei Antriebsräume ausgebildet, die jeweils Bestandteile einer fluidbetätigten Antriebseinrichtung aufnehmen, welche mit dem einen axialen Endbereich des ersten Basiskörpers verbunden sind. Durch Aktivierung der Antriebseinrichtungen kann eine lineare Relativbewegung zwischen den beiden Basiskörpern hervorgerufen werden, wobei zwischen den beiden Basiskörpern platzierte Linearführungsmittel für eine geführte Bewegung sorgen.

Ein Nachteil der bekannten Linearantriebseinheit besteht darin, dass das im Bereich der Linearführungsmittel vorhandene Führungsspiel relativ umständlich eingestellt werden muss. In der Regel geschieht dies dadurch, dass die am Profilteil des ersten Basiskörpers gelagerten Bestandteile der Linearführungsmittel relativ zum Basiskörper justiert werden. Dies erfordert zum einen eine Ausstattung mit geeigneten Einstellmitteln, was die Herstellungskosten der Linearantriebseinheit erhöht. Zum anderen ist die Einstellung relativ umständlich, weil die Linearführungsmittel vom U-förmigen Profilteil des ersten Basiskörpers verdeckt werden und daher nur schwer zugänglich bzw. einsehbar sind.

Aus der FR 1 552 415 A die als nächstliegender Stand der Technik angesehen wird, geht eine manuell betätigbare Linearantriebseinheit hervor, bei der ein Schlitten auf einer Gleitschiene angeordnet ist, die aus zwei randseitig abgewinkelten Elementen besteht. Die beiden Elemente sind fest miteinander verbunden, wobei beim Zusammenbau eine gewünschte Vorspannung einstellbar ist, um eine spielfreie Montage zu erhalten. Zur Betätigung der Linearantriebseinheit kann eine Gewindespindel verdreht werden, die mit dem Schlitten in Gewindeeingriff steht und an einem Querteil drehgelagert ist, das endseitig an einem der beiden Elemente befestigt ist.

Die US 5 328 269 beschreibt eine Führungseinrichtung, bei der ein verschiebbares Teil zwischen zwei L-förmigen Elementen verstellbar gelagert ist. Zur Einstellung des Lagerspiels werden die beiden L-förmigen Elemente relativ zueinander positioniert und anschließend fest miteinander verbunden.

Die EP 0 698 744 A1 beschreibt eine Linearantriebseinheit, bei der eine rechteckförmige Mutter in einem U-förmigen Körper sitzt und von zwei Schenkeln des U-förmigen Körpers flankiert wird. Zwischen der Mutter und den beiden Schenkeln befinden sich Linearführungsmittel. Die Mutter ist von einer Spindel durchsetzt, die in endseitigen Querteilen drehbar gelagert ist und die sich in Rotation versetzen lässt, um eine Linearbewegung der Mutter hervorzurufen. Der die beiden Schenkel enthaltende U-förmige Körper ist einstückig ausgebildet und mit den beiden Querteilen fest verbunden.

Die EP 0 704 275 A2 beschreibt einen Linearantrieb mit einem U-förmigen Schlittenkörper, der an einer fest mit dem Gehäuse des Linearantriebes verbundenen Führungsschiene verschiebbar gelagert ist. Die Führungsschiene wird von dem U-förmigen Schlitten reiterartig übergriffen.

Es ist die Aufgabe der vorliegenden Erfindung, eine Linearantriebseinheit der eingangs genannten Art zu schaffen, die trotz kostengünstigen Aufbaus einfach und präzise herstellbar ist.

Zur Lösung dieser Aufgabe ist vorgesehen, dass die mindestens eine Antriebseinrichtung an einem sich in einer Querrichtung des Profilteils zwischen den beiden Schenkeln des Profilteils erstreckenden und an beiden Schenkeln verankerten Querteil angreift, und dass das Querteil derart formschlüssig mit den beiden Schenkeln des Profilteils in Eingriff steht, dass zwischen ihm und dem Profilteil in den Bewegungsrichtungen der linearen Relativbewegung eine spielfreie Kraftübertragung möglich ist, wobei gleichzeitig beim Zusammenbau der Profilelemente und/oder nach dem festen Zusammenfügen derselben ein Bewegungsspiel zwischen dem Querteil und den Schenkeln in der Querrichtung vorhanden ist.

Auf diese Weise liegt eine Linearantriebseinheit vor, bei der im Rahmen der Montage des U-förmigen Profilteils automatisch gleichzeitig das Führungsspiel der Linearführungsmittel eingestellt werden kann, so dass sich nachträgliche aufwendige Justierarbeiten erübrigen und auf kostengünstige Linearführungsmittel zurückgegriffen werden kann, die ihrerseits über keine besonderen Spieleinstellmittel verfügen. Die das Antriebsgehäuse flankierenden Schenkel des U-förmigen Profilteils sind Bestandteile ursprünglich getrennter Profilelemente, die bei der Montage der Linearantriebseinheit längsseits aneinandergesetzt werden, wobei sie zunächst noch relativ zueinander frei beweglich bzw. verschieblich sind, so dass sich die Breite des zwischen ihren Schenkeln definierten Zwischenraumes durch Vorgabe unterschiedlicher Relativpositionen variabel einstellen lässt. Da die eingestellte Breite des Zwischenraumes unmittelbar das Führungsspiel der zwischen einem jeweiligen Schenkel und dem Antriebsgehäuse platzierten Linearführungsmittel beeinflusst, kann somit durch die gewählte Positionierung und Vorspannung sehr einfach das gewünschte Führungsspiel vorgegeben werden. Durch anschließendes festes Zusammenfügen der Profilelemente, beispielsweise durch Verkleben, bleibt die vorgenommene Einstellung unveränderlich erhalten, so dass Nachjustierungen entbehrlich sind. Vor allem bei Linearantriebseinheiten kleiner und kleinster Abmessungen hat das erfindungsgemäße Produktkonzept besondere Vorteile, weil hier infolge der miniaturisierten Bauweise Manipulationen an den Linearführungsmitteln wenn überhaupt, so nur sehr umständlich, vorgenommen werden könnten. Die besondere Anordnung des Querteils ermöglicht eine spielfreie Übertragung der Antriebskräfte, wobei gleichzeitig eine exakt fluchtende Ausrichtung sämtlicher Bestandteile erreicht wird, die übermäßigen Verschleiß verhindert.

Vorteilhafte Weiterbildungen der Erfindung gehen aus den Unteransprüchen hervor.

Die Linearführungsmittel sind vorzugsweise als Wälzführungen ausgebildet und verfügen über an jedem Schenkel des Profilteils und an den zugewandten Seitenflächen des Antriebsgehäuses vorgesehene Führungsbahnen, die mit zwischengefügten Wälzelementen zusammenwirken. Letztere können dabei zu Wälzeinheiten zusammengefasst sein.

Die das Profilteil bildenden Profilelemente sind im Querschnitt vorzugsweise L-förmig ausgebildet und so zusammengefügt, dass sie sich mit zweien ihrer L-Schenkel überlappen. Im überlappten Bereich können die L-Schenkel zusammengeklebt oder auf sonstige Weise zusammengefügt sein.

Bei einer besonders vorteilhaften Bauform ist das Antriebsgehäuse mit zwei nebeneinanderliegenden Antriebsräumen für je eine Antriebseinheit versehen, wobei die beiden Antriebseinheiten entweder am gleichen axialen Endbereich oder an einander entgegengesetzten Endbereichen des ersten Basiskörpers angreifen können. Die letztgenannte Bauform kommt insbesondere im Zusammenhang mit einem im Vergleich zur Baulänge des zweiten Basiskörpers längeren ersten Basiskörper zur Anwendung, wobei der zweite Basiskörper an beiden einander entgegengesetzt orientierten Stirnseiten vom ersten Basiskörper überragt wird.

Die Antriebseinrichtungen können so ausgeführt sein, dass jede von ihnen für die Erzeugung der linearen Relativbewegung in nur einer der beiden möglichen Bewegungsrichtungen verantwortlich ist. Besonders vorteilhaft ist dies im Zusammenhang mit einer Ausgestaltung der Antriebseinrichtungen in fluidbetätigter Bauweise, da hier die Anzahl der Dichtstellen beträchtlich reduziert wird.

Eine jeweilige Antriebseinrichtung verfügt bei fluidbetätigter Bauart zweckmäßigerweise über einen im zugeordneten Antriebsraum des Antriebsgehäuses verschiebbar angeordneten Kolben, der über ein Längserstreckung aufweisendes Kraftübertragungsteil am betreffenden axialen Endbereich des ersten Basiskörpers angreift. Dabei kann das Kraftübertragungsteil rohrförmig ausgebildet sein und zugunsten einer einfachen Herstellung zusammen mit dem Kolben eine Baueinheit nach Art eines Plungerkolbens bilden.

Bei einer derart hohl ausgeführten Baueinheit besteht die Möglichkeit, im Innern des Kolbens und/oder des Kraftübertragungsteils eine Anschlageinheit unterzubringen, die zur Vorgabe einer Endlage des Kolbens und damit der erzeugten Relativbewegung verwendbar ist. Die Anschlageinheit verfügt zweckmäßigerweise über eine variabel positionierbare Anschlagpartie, um nach Bedarf unterschiedliche Kolbenendlagen vorgeben zu können.

Die Einstellung der Kolbenendlage geschieht zweckmäßigerweise durch eine an dem dem Kolben entgegengesetzten Ende des Kraftübertragungsteils vorgesehene Öffnung hindurch, die das Einführen eines geeigneten Einstellwerkzeuges ermöglicht.

Die Anschlageinheit kann mit einer Pufferungs- und/oder Dämpfungseinrichtung ausgestattet sein, um den Endaufprall zu verringern.

Das Querteil kann insbesondere plattenartig ausgebildet und derart orientiert sein, dass seine Plattenebene rechtwinkelig zur Längsachse des ersten Basiskörpers verläuft.

Es kann vorgesehen sein, dass das Querteil in der Querrichtung des Profilteils schwimmend am Profilteil gelagert ist, sei es durch Belassen eines gewissen Bewegungsspielraumes oder durch Integration elastisch nachgiebiger Ausgleichsmittel.

Nachfolgend wird die Erfindung anhand der beiliegenden Zeichnung näher erläutert. In dieser zeigen:

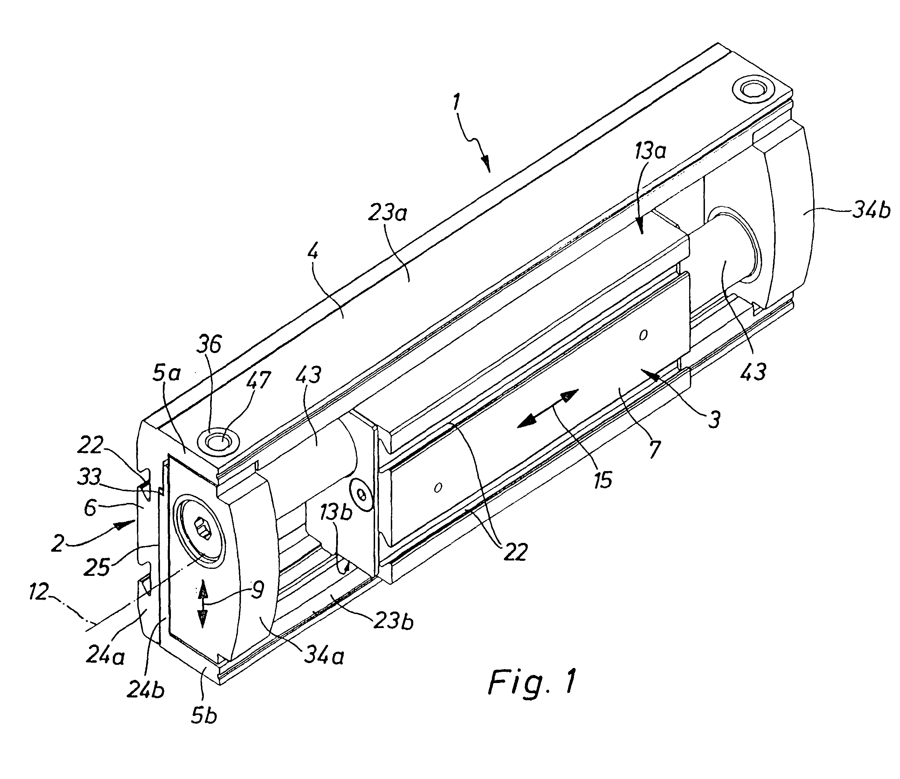

- Fig. 1: eine bevorzugte Ausführungsform der erfindungsgemäßen Linearantriebseinheit in perspektivischer Darstellung,

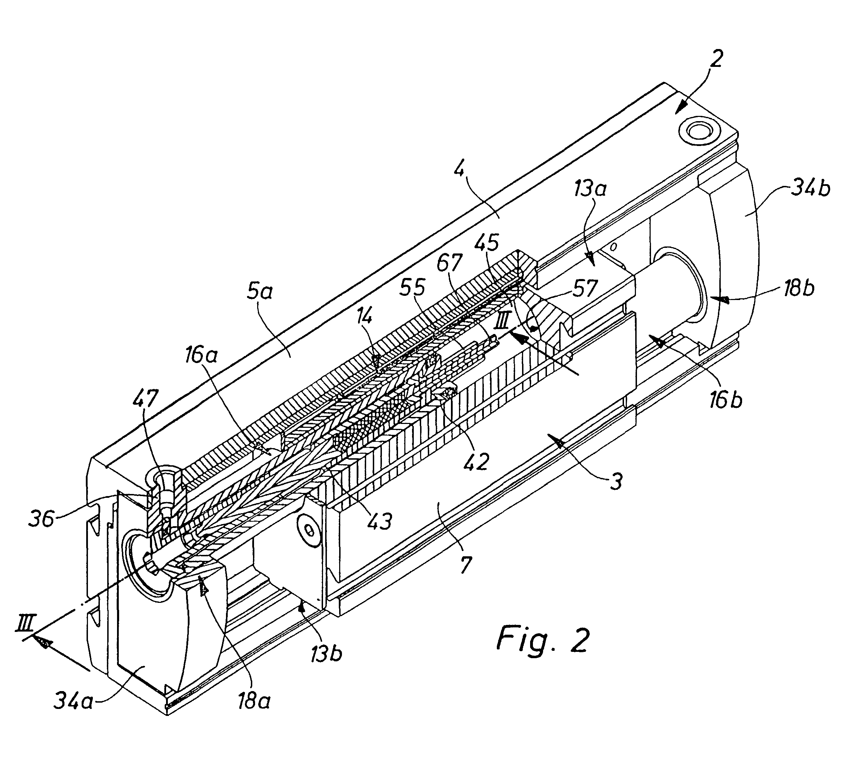

- Fig. 2: die Linearantriebseinheit aus Fig. 1, im Bereich einer Antriebseinrichtung teilweise aufgebrochen,

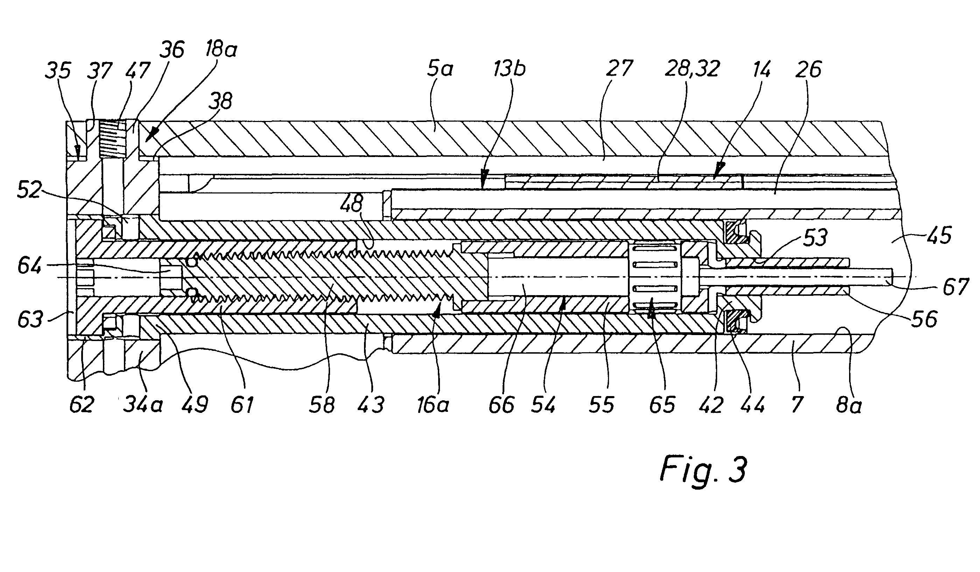

- Fig. 3: einen Längsschnitt durch die Linearantriebseinheit in dem in Fig. 2 aufgebrochen dargestellten Bereich gemäß Schnittlinie III-III und

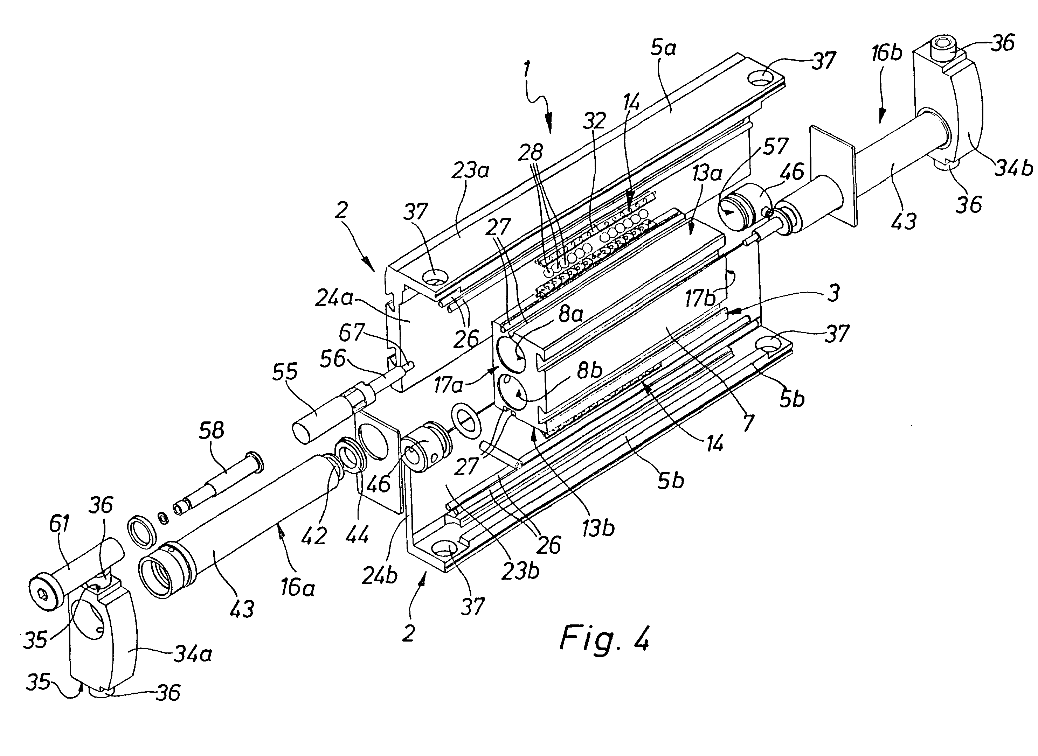

- Fig. 4: eine Explosionsdarstellung der wesentlichen Komponenten der in Fig. 1 bis 3 gezeigten Linearantriebseinheit.

Die beispielsgemäße Linearantriebseinheit 1 verfügt über einen länglichen ersten Basiskörper 2 und einen diesbezüglich mit kürzerer Baulänge ausgeführten zweiten Basiskörper 3.

Der erste Basiskörper 2 beinhaltet ein längliches, U-förmig profiliertes Profilteil 4 mit zwei sich unter Abstand in einer Querrichtung 9 gegenüberliegenden Schenkeln 5a, 5b und einem diese verbindenden Verbindungssteg 6.

Der zweite Basiskörper 3 verfügt über ein beim Ausführungsbeispiel blockähnliches längliches Gehäuse, das als Antriebsgehäuse 7 bezeichnet sei und das im Innern zwei nebeneinanderliegende und zueinander parallele Antriebsräume 8a, 8b länglicher Erstreckung aufweist. Die Längserstreckung der Antriebsräume 8a, 8b ist parallel zur Längsachse 12 der Linearantriebseinheit 1, wobei diese Längsachse 12 gleichzeitig auch die Längsachsen der beiden Basiskörper 2, 3 darstellt.

Das Profilteil 4 ist mit seiner U-Öffnung voraus so an den zweiten Basiskörper 3 angesetzt, dass es dessen Antriebsgehäuse 7 reiterähnlich übergreift, wobei seine längsseitigen Schenkel 5a, 5b die beiden zugewandten Seitenflächen 13a, 13b des Antriebsgehäuses 7 mit Abstand flankieren.

Zwischen jedem Schenkel 5a, 5b und der zugewandten Seitenfläche 13a, 13b des Antriebsgehäuses 7 befinden sich Linearführungsmittel 14, die eine geführte lineare Relativbewegung zwischen den beiden Basiskörpern 2, 3 gewährleisten. Die dabei möglichen, einander entgegengesetzten Bewegungsrichtungen fallen mit der Ausrichtung der Längsachse 12 zusammen und sind durch Doppelpfeil 15 angedeutet.

Damit die Linearantriebseinheit ihre Antriebsfunktion erfüllen kann, ist sie mit mindestens einer und dabei bevorzugt mit zwei Antriebseinrichtungen 16a, 16b ausgestattet. Da der Aufbau dieser beiden Antriebseinrichtungen 16a, 16b identisch ist, ist nur die eine davon in den Zeichnungen detailliert dargestellt. Bezugnahmen auf diese Antriebseinrichtung 16a sind somit gleichzeitig auch als Bezugnahme auf die zweite Antriebseinrichtung 16b zu verstehen, sofern im Einzelfall nichts Gegenteiliges ausgeführt wird.

Jedem der beiden Antriebsräume 8a, 8b ist eine der Antriebseinrichtungen 16a, 16b zugeordnet, wobei letztere teilweise im betreffenden Antriebsraum 8a, 8b aufgenommen ist. Sie ragt an einer der beiden axial orientierten Stirnseiten 17a, 17b aus dem Antriebsraum 8a, 8b heraus und greift am gegenüberliegenden axialen Endbereich 18a, 18b des ersten Basiskörpers 2 an. Durch Aktivierung der Antriebseinrichtungen 16a, 16b kann somit die lineare Relativbewegung hervorgerufen werden.

Während ihres Einsatzes ist die Linearantriebseinheit 1 entweder mit dem ersten oder dem zweiten Basiskörper 2, 3 ortsfest fixiert, während am jeweils anderen Basiskörper eine zu bewegende Einrichtung bzw. ein zu bewegendes Bauteil festlegbar ist. Beide Basiskörper 2, 3 verfügen über beispielsweise nutartige Befestigungsmittel 22, die die Verbindung zu einer Haltestruktur oder zu einem zu bewegenden Objekt ermöglichen.

Der besondere Aufbau der Linearantriebseinheit 1 ermöglicht eine besonders einfache Herstellung. Bei der Montage des Profilteils 4 kann automatisch die Einstellung des Führungsspiels der Linearführungsmittel erfolgen, um eine möglichst spielfreie Linearführung zwischen den beiden Basiskörpern 2, 3 zu erhalten.

Um dies zu ermöglichen, besteht das U-förmige Profilteil 4 aus zwei jeweils einen der Schenkel 5a, 5b enthaltenden Profilelementen 23a, 23b, die längsseits aneinandergesetzt und fest zusammengefügt sind.

Das Aneinandersetzen und Zusammenfügen der Profilelemente 23a, 23b erfolgt zweckmäßigerweise bei zwischen den zunächst noch weiter voneinander entfernten Schenkeln 5a, 5b platziertem Antriebsgehäuse 7 und Linearführungsmitteln 14. Bei der Montage werden die zunächst noch weiter voneinander entfernten Schenkel 5a, 5b in der Querrichtung 9 einander angenähert, so dass sich der Abstand zwischen ihnen verringert und die Linearführungsmittel 14 in zunehmendem Maße zwischen den Schenkeln 5a, 5b und dem Antriebsgehäuse 7 mit einer Vorspannung beaufschlagt werden. Die gewünschte Vorspannung der Linearführungsmittel 14 lässt sich somit bequem unmittelbar durch den Montagevorgang des Profilteils 4 einstellen.

Die beiden Profilelemente 23a, 23b sind im Querschnitt bevorzugt L-förmig ausgeführt, so dass man von Winkelprofilen sprechen könnte, die so aneinandergesetzt sind, dass sie sich mit ersten L-Schenkeln 24a, 24b in der Querrichtung 9 überlappen. Das Überlappungsmaß kann im wesentlichen der Breite des zwischen den beiden Schenkeln 5a, 5b definierten Zwischenraumes entsprechen. Der Überlappungsbereich definiert einen großflächigen Fügebereich 25, in dem die beiden ersten L-Schenkel 24a, 24b aneinander anliegen und durch Verkleben fest und vorzugsweise unlösbar zusammengefügt sind.

Das feste, starre Zusammenfügen der Profilelemente 23a, 23b könnte auch durch andere geeignete Fügeverfahren erfolgen, beispielsweise durch Verschweißen oder auch unter alternativer oder zusätzlicher Verwendung von Befestigungselementen wie Schrauben oder Nieten.

Die Formgebung der beiden Profilelemente 23a, 23b ist so aufeinander abgestimmt, dass die optimale Einstellung des Führungsspiels erreicht wird, bevor die Profilelemente 23a, 23b in der Querrichtung 9 aneinander stoßen. Dies wird beispielsweise dadurch erreicht, dass man zwischen den beiden ersten L-Schenkeln 24a, 24b in der mit der Querrichtung 9 zusammenfallenden Überlappungsrichtung einen sich über die gesamte Profilteillänge erstreckenden Mindestabstand 33 vorsieht. Die ersten L-Schenkel 24a, 24b stoßen also nicht am jeweils anderen Profilelement an.

Die Linearführungsmittel 14 sind zweckmäßigerweise als Wälzführungen ausgebildet und enthalten beim Ausführungsbeispiel jeweils am einen Schenkel 5a, 5b und an der dieser zugewandten Seitenfläche 13a, 13b des Antriebsgehäuses 7 angeordnete Paare von Lagerstäben 26, 27, die Führungsbahnen definieren, welche mit zwischengefügten Wälzelementen 28 zusammenwirken. Letztere können bei der Relativbewegung der beiden Basiskörper 2, 3 an den Führungsbahnen abrollen. Zweckmäßigerweise sind die Wälzelemente 28 durch Käfige 32 oder dergleichen zu Wälzeinheiten zusammengefasst.

Die Antriebseinrichtungen 16a, 16b greifen beim Ausführungsbeispiel nicht unmittelbar am Profilteil 4, sondern an einem ebenfalls zum ersten Basiskörper 2 gehörenden Querteil 34a, 34b an, das zwischen die beiden Schenkel 5a, 5b des Profilteils 4 eingegliedert und zugleich an diesen Schenkeln 5a, 5b verankert ist.

Die beiden Antriebseinrichtungen 16a, 16b sind beim Ausführungsbeispiel so installiert, dass sie seitens des ersten Basiskörpers 2 jeweils nur an einem dessen axialer Endbereiche 18a, 18b angreifen, wobei die eine Antriebseinrichtung 16a am einen axialen Endbereich 18a und die andere Antriebseinrichtung 16b am anderen axialen Endbereich 18b des ersten Basiskörpers 2 angreift. Dementsprechend ist der erste Basiskörper 2 an beiden axialen Endbereichen 18a, 18b mit einem Querteil 34a, 34b versehen, das bevorzugt klotz- bzw. plattenartig ausgebildet ist und mit zur Längsachse 12 rechtwinkelig orientierter Ausdehnungsebene zwischen die beiden Schenkel 5a, 5b eingesetzt ist. Man könnte die Querteile 34a, 34b auch als Deckel bezeichnen, da sie den längsseits von den Schenkeln 5a, 5b begrenzten Zwischenraum axialseitig abschließen.

Jedes Querteil 34a, 34b verfügt über den Schenkeln 5a, 5b zugewandte, einander entgegengesetzt orientierte Abschlussflächen 35, von denen jeweils mindestens ein vorzugsweise zylindrisch konturierter Zapfen 36 wegragt. Jedem dieser Zapfen 36 ist im zugeordneten Schenkel 5a, 5b eine fluchtende, komplementär konturierte und vorzugsweise als Durchbrechung ausgebildete Ausnehmung 37 zugeordnet, in die der zugehörige Zapfen 36 spielfrei passend eintaucht.

Durch die miteinander in Eingriff stehenden Zapfen 36 und Ausnehmungen 37 ergibt sich eine formschlüssige Verankerung des Querteils 34a, 34b am Profilteil 4 in einer Weise, dass zwischen einem jeweiligen Querteil 34a, 34b und dem Profilteil 4 in den Bewegungsrichtungen 15 der linearen Relativbewegung eine spielfreie Kraftübertragung möglich ist.

Gleichzeitig sind die Abmessungen der Querteile 34a, 34b in der Querrichtung 9 so gewählt, dass der Abstand zwischen den an ihnen vorgesehenen Abschlussflächen 35 geringer ist als der Abstand der Innenflächen der beiden Schenkel 5a, 5b im Montagebereich des Querteils 34a, 34b. Auf diese Weise ist gewährleistet, dass die Einstellung des Führungsspiels der Linearführungsmittel 14 nicht durch die zwischengefügten Querteile 34a, 34b blockiert wird. Es ist vielmehr so, dass sich durch die Abstandsdifferenz ein Zwischenraum 38 zwischen einem jeweiligen Querteil 34a, 34b und den Schenkeln 5a, 5b einstellt, der es dem Querteil 34a, 34b bei der Montage ermöglicht, ungeachtet der Relativlage der Profilelemente 23a, 23b eine exakte Ausrichtung hinsichtlich der angreifenden Antriebseinrichtungen 16a, 16b beizubehalten. Dadurch werden Verkantungen und frühzeitiger Verschleiß vermieden. Beim Ausführungsbeispiel sind die Querteile 34a, 34b in der Querrichtung 9 des Profilteils 4 ständig schwimmend gelagert, so dass auch während der linearen Relativbewegung auftretende Fluchtungsfehler selbsttätig ausgeglichen werden. Der Zwischenraum 38 verleiht hierbei die notwendige Bewegungsfreiheit. Alternativ könnten aber auch elastische Mittel vorhanden sein, die die Querbeweglichkeit garantieren.

In aller Regel wird es jedoch ausreichend sein, während des Zusammenbaus des ersten Basiskörpers 2 das notwendige Bewegungsspiel zu gewährleisten. Dabei richten sich die Querteile 34a, 34b selbständig aus und können letztlich in der sich einstellenden Position durch Verkleben oder sonstige Maßnahmen zusätzlich fixiert werden.

Die Linearantriebseinheit 1 ließe sich ohne weiteres mit elektrisch aktivierbaren Antriebseinrichtungen ausstatten. Beim Ausführungsbeispiel sind allerdings fluidbetätigte Antriebseinrichtungen 16a, 16b vorhanden, deren Aufbau nachstehend anhand der einen Antriebseinrichtung 16a näher erläutert wird.

So enthält jede Antriebseinrichtung 16a, 16b einen im zugeordneten, vorzugsweise zylindrisch konturierten Antriebsraum 8a, 8b verschiebbar angeordneten Kolben 42, der über ein Längserstreckung aufweisendes Kraftübertragungsteil 43 mit dem zugeordneten Querteil 34a, 34b starr verbunden ist. Der mit einer Dichtung 44 versehene Kolben 42 begrenzt im Antriebsraum 8a, 8b auf der dem Kraftübertragungsteil 43 entgegengesetzten Seite eine Beaufschlagungskammer 45, die andernends durch einen Abschlussdeckel 46 fluiddicht verschlossen ist. Durch Einspeisung eines fluidischen Druckmediums, insbesondere Druckluft, in die Beaufschlagungskammer 45 eines der beiden Antriebsräume 8a, 8b, verbunden mit gleichzeitiger Entlüftung der Beaufschlagungskammer 45 des anderen Antriebsraumes, findet eine lineare Relativbewegung der beiden Basiskörper 2, 3 in der einen Bewegungsrichtung statt. Bei umgekehrter Druckbeaufschlagung und Entlüftung ändert sich die Bewegungsrichtung. Somit ist jede Antriebseinrichtung 16a, 16b beim Ausführungsbeispiel für die Erzeugung der linearen Relativbewegung in nur einer der beiden möglichen Bewegungsrichtungen 15 zuständig. Dies vereinfacht den Aufbau, weil mit der am Kolben 42 angeordneten Dichtung 44 nur eine dynamische Dichtstelle abzudichten ist.

Das Einspeisen und Abführen des Druckmediums erfolgt vorzugsweise durch die aus Kraftübertragungsglied 43 und Kolben 42 bestehende Baueinheit hindurch, und zwar ausgehend von demjenigen axialen Endbereich 18a, 18b, an dem das Kraftübertragungsglied 43 fixiert ist. Die zugehörige Anschlussöffnung 47 befindet sich zweckmäßigerweise an dem Querteil 34a, 34b und kann dort insbesondere in einem der Zapfen 36 ausgebildet sein. Beim Ausführungsbeispiel sind jeweils beide Zapfen 36 mit einer Anschlussöffnung 47 versehen, um eine wahlweise Anschlussmöglichkeit für Druckmittelleitungen zu eröffnen.

Die vorerwähnte Baueinheit aus Kolben 42 und Kraftübertragungsglied 43 hat einen rohrförmigen Aufbau, so dass sich ein axial durchgehender Hohlraum 48 mit eventuell abgestuftem Querschnitt ergibt, der in einem unter Abdichtung in das Querteil 34a, 34b fest eingesetzten Endabschnitt 49 des Kraftübertragungsteils 43 über eine oder mehrere Querbohrungen 52 mit der Anschlussöffnung 47 kommuniziert. Die Verbindung zur Beaufschlagungskammer 45 stellt eine den Kolben 42 durchsetzende Durchbrechung 43 her.

Die aus Kolben 42 und Kraftübertragungsglied 43 bestehende Baueinheit ist zweckmäßigerweise einstückig ausgebildet und nach Art eines Plungerkolbens ausgeführt, wobei der Außenquerschnitt des Kraftübertragungsgliedes 43 mit demjenigen des Kolbens 42 übereinstimmt, so dass der in den Antriebsraum 8a, 8b eintauchende Längenabschnitt der Baueinheit optimal in Querrichtung abgestützt wird.

Der Hohlraum 48 kann vorteilhaft genutzt werden, um wie abgebildet eine Anschlageinheit 54 unterzubringen. Sie ermöglicht beim Ausführungsbeispiel eine variable Vorgabe der Endlage des Kolbens 42 in der Einfahrrichtung.

Die patronenartig eingesetzte Anschlageinheit 54 enthält ein längliches Kopfstück 55, das mit einer im Durchmesser verringerten Anschlagpartie 56 durch die Durchbrechung 53 hindurchgreift und in die Beaufschlagungskammer 45 hineinragt. Ihr liegt eine zweckmäßigerweise am gegenüberliegenden Abschlussdeckel 46 vorgesehene gehäusefeste Gegenfläche 57 axial gegenüber.

An der der Anschlagpartie 56 entgegengesetzten Rückseite des Kopfstückes 51 ist ein Gewindekörper 58 vorgesehen, der unter Abdichtung in ein mit einem Innengewinde versehenes, durchgehend hohl ausgebildetes Halteelement 61 eingeschraubt ist, das seinerseits durch eine Gewindeverbindung 62 oder eine sonstige feste Verbindung im Hohlraum 48 des Kraftübertragungsteils 43 drehfest festgelegt ist.

Durch die vom zweiten Basiskörper 3 abgewandte äußere Öffnung 63 des Kraftübertragungsteils 43 hindurch lässt sich in das hohle Halteelement 61 ein Schraubwerkzeug einführen und an einer am zugewandten Ende des Gewindekörpers 58 vorgesehenen Werkzeugangriffspartie 64 ansetzen. Durch Verdrehen des Gewindekörpers 58 relativ zum axial unbeweglichen Halteelement 61 lässt sich nun die Axialposition des Kopfstückes 55 und dementsprechend der Anschlagpartie 56 relativ zum Kolben 42 verändern. Dementsprechend kann auf diejenige Relativposition der beiden Basiskörper 2, 3 Einfluss genommen werden, bei der diese durch gegenseitige Anlage der Anschlagpartie 56 und der Gegenfläche 57 eine Positionsendlage einnehmen.

Die Anschlageinheit 54 ist beim Ausführungsbeispiel in vorteilhafter Weise ergänzend mit einer Dämpfungseinrichtung 65 ausgestattet. Diese sitzt im Innern des hohlen Kopfstückes 51 und enthält beim Ausführungsbeispiel einen fluidischen Stoßdämpfer 66, der mit einem von seiner Stoßstange gebildeten stößeiförmigen Krafteinleitungselement 67 koaxial durch die rohrförmige Anschlagpartie 56 hindurchgreift und diese zur Gegenfläche 57 hin ein Stück weit überragt.

Bei Annäherung an die Endlage trifft nun zunächst das Krafteinleitungselement 67 an der Gegenfläche 57 auf, so dass die Geschwindigkeit der Relativbewegung abgebremst wird, bevor schließlich die Anschlagpartie 56 zur Positionsvorgabe ebenfalls an der Gegenfläche 57 zur Anlage gelangt.

Anstelle einer Dämpfungseinrichtung 65 könnte auch eine einfache Pufferungseinrichtung treten, bei der das Krafteinleitungselement 67 beispielsweise auf einen gummielastisch verformbaren Pufferkörper einwirkt.

Um eine besonders flache Bauweise zu erzielen, sind die Antriebsräume 8a, 8b und somit die Antriebseinrichtungen 16a, 16b in einer gemeinsamen Ebene angeordnet, die zur Erstreckungsebene des Verbindungssteges 6 des Profilteils 4 parallel verläuft.

Prinzipiell könnte die Linearantriebseinheit 1 auch mit nur einem Antriebsraum und einer zugeordneten Antriebseinrichtung ausgestattet sein. Ferner könnte jede vorhandene Antriebseinrichtung gleichzeitig an beiden axialen Endbereichen 18a, 18b des ersten Basiskörpers 2 angreifen, wobei sich in einem solchen Falle an beiden Axialseiten des Kolbens 42 ein Kraftübertragungsglied anschließen würde. Beim Ausführungsbeispiel ergeben sich jedoch die oben bereits erwähnten Vorteile hinsichtlich reduzierter Dichtstellenanzahl in Verbindung mit einer besonders kompakten Bauform auch in der Längsrichtung.

## Patentansprüche

1. Linearantriebseinheit, mit einem ein im Querschnitt U-förmiges Profilteil (4) enthaltenden ersten Basiskörper (2), mit einem zweiten Basiskörper (3), der ein Gehäuse (Antriebsgehäuse 7) aufweist, das unter Zwischenschaltung eine geführte lineare Relativbewegung ermöglichender Linearführungsmittel (14) im Bereich der U-Öffnung des Profilteils (4) platziert ist, und mit mindestens einem Antriebsraum (8a, 8b) im Innern des Antriebsgehäuses (7), der Bestandteile einer Antriebseinrichtung (16a, 16b) enthält, die an zumindest einer Stirnseite des zweiten Basiskörpers (3) herausragt und am zugeordneten axialen Endbereich (18a, 18b) des ersten Basiskörpers (2) angreift, und bei deren Aktivierung die lineare Relativbewegung zwischen den beiden Basiskörpern (2, 3) hervorgerufen wird, wobei das Profilteil (4) des ersten Basiskörpers (2) das Antriebsgehäuse (7) des zweiten Basiskörpers (2) reiterähnlich übergreift, so dass seine längsseitigen Schenkel (5a, 5b) die Seitenflächen (13a, 13b) des Antriebsgehäuses (7) flankieren, wobei zwischen jedem Schenkel (5a, 5b) des Profilteils (4) und der zugewandten Seitenfläche (13a, 13b) des Antriebsgehäuses (7) die Linearführungsmittel (14) angeordnet sind, und das Profilteil (4) aus zwei jeweils einen der Schenkel (5a, 5b) enthaltenden, unter Einstellung des Führungsspiels der Linearführungsmittel (14) längsseits aneinandergesetzten und fest zusammengefügten Profilelementen (23a, 23b) besteht, **dadurch gekennzeichnet, dass** die mindestens eine Antriebseinrichtung (16a, 16b) an einem sich in einer Querrichtung (9) des Profilteils (4) zwischen den beiden Schenkeln (5a, 5b) des Profilteils (4) erstreckenden und an beiden Schenkeln (5a, 5b) verankerten Querteil (34a, 34b) angreift, und dass das Querteil (34a, 34b) derart formschlüssig mit den beiden Schenkeln (5a, 5b) des Profilteils (4) in Eingriff steht, dass zwischen ihm und dem Profilteil (4) in den Bewegungsrichtungen (15) der linearen Relativbewegung eine spielfreie Kraftübertragung möglich ist, wobei gleichzeitig beim Zusammenbau der Profilelemente (23a, 23b) und/oder nach dem festen Zusammenfügen derselben ein Bewegungsspiel zwischen dem Querteil (34a, 34b) und den Schenkeln (5a, 5b) in der Querrichtung (9) vorhanden ist.

2. Linearantriebseinheit nach Anspruch 1, **dadurch gekennzeichnet, dass** die beiden Profilelemente (23a, 23b) durch Verkleben fest zusammengefügt sind.

3. Linearantriebseinheit nach Anspruch 1 oder 2, **dadurch gekennzeichnet, dass** die Linearführungsmittel (14) als Wälzführungen ausgebildet sind und über an jedem Schenkel (5a, 5b) des Profilteils (4) und an den zugewandten Seitenflächen (13a, 13b) des Antriebsgehäuses (7) vorgesehene Führungsbahnen verfügen, die mit zwischengefügten Wälzelementen (28) zusammenwirken.

4. Linearantriebseinheit nach einem der Ansprüche 1 bis 3, **dadurch gekennzeichnet, dass** die einem jeweiligen Schenkel (5a, 5b) zugeordneten Linearführungsmittel (14) über zu Wälzeinheiten zusammengefasste Wälzelemente (28) verfügen.

5. Linearantriebseinheit nach einem der Ansprüche 1 bis 4, **dadurch gekennzeichnet, dass** die beiden Profilelemente (23a, 23b) im Querschnitt jeweils L-förmig ausgebildet und unter gegenseitiger Überlappung zweier erster L-Schenkel (24a, 24b) fest zusammengefügt sind.

6. Linearantriebseinheit nach einem der Ansprüche 1 bis 5, **dadurch gekennzeichnet, dass** die in der Überlappungsrichtung orientierten Stirnflächen der ersten L-Schenkel (24a, 24b) am jeweils anderen Profilelement nicht anliegen.

7. Linearantriebseinheit nach einem der Ansprüche 1 bis 6, **dadurch gekennzeichnet, dass** das Antriebsgehäuse (7) zwei nebeneinanderliegende Antriebsräume (8a, 8b) für je eine Antriebseinrichtung (16a, 16b) enthält, wobei die Antriebsräume (8a, 8b) zweckmäßigerweise in einer gemeinsamen Ebene liegen, die zur Erstreckungsebene des die beiden Schenkel (5a, 5b) verbindenden Verbindungssteges (6) des Profilteils (4) parallel verläuft.

8. Linearantriebseinheit nach Anspruch 7, **dadurch gekennzeichnet, dass** die beiden Antriebseinrichtungen (16a, 16b) an entgegengesetzten axialen Endbereichen des ersten Basiskörpers (2) angreifen, wobei jede Antriebseinrichtung (16a, 16b) an nur einem axialen Endbereich (18a, 18b) angreift.

9. Linearantriebseinheit nach Anspruch 7 oder 8, **dadurch gekennzeichnet, dass** jede Antriebseinrichtung (16a, 16b) für die Erzeugung der linearen Relativbewegung in nur einer der beiden möglichen Bewegungsrichtungen zuständig ist.

10. Linearantriebseinheit nach einem der Ansprüche 1 bis 9, **dadurch gekennzeichnet, dass** die mindestens eine Antriebseinrichtung (16a, 16b) als elektrische Antriebseinrichtung ausgeführt ist.

11. Linearantriebseinheit nach einem der Ansprüche 1 bis 9, **dadurch gekennzeichnet, dass** die mindestens eine Antriebseinrichtung (16a, 16b) als fluidbetätigte Antriebseinrichtung ausgeführt ist.

12. Linearantriebseinheit nach Anspruch 11, **dadurch gekennzeichnet, dass** die mindestens eine Antriebseinrichtung (16a, 16b) einen im zugeordneten Antriebsraum (8a, 8b) verschiebbar angeordneten Kolben (42) aufweist, der über ein Längserstreckung aufweisendes Kraftübertragungsteil (43) am betreffenden axialen Endbereich (18a, 18b) des ersten Basiskörpers (2) angreift.

13. Linearantriebseinheit nach Anspruch 12, **dadurch gekennzeichnet, dass** der Kolben (42) im Antriebsraum (8a, 8b) auf der dem Kraftübertragungsteil (43) abgewandten Seite eine Beaufschlagungskammer (45) begrenzt, die durch den Kolben (42) und das Kraftübertragungsteil (43) hindurch mit einem Betätigungsfluid beaufschlagbar ist, um eine lineare Relativbewegung zwischen den beiden Basiskörpern (2, 3) hervorzurufen.

14. Linearantriebseinheit nach Anspruch 12 oder 13, **dadurch gekennzeichnet, dass** das Kraftübertragungsteil (43) durchgehend hohl und insbesondere rohrförmig ausgebildet ist.

15. Linearantriebseinheit nach Anspruch 14, **dadurch gekennzeichnet, dass** der Kolben (42) und das Kraftübertragungsteil (43) als vorzugsweise einstückige Baueinheit nach Art eines Plungerkolbens ausgeführt sind.

16. Linearantriebseinheit nach Anspruch 14 oder 15, **dadurch gekennzeichnet, dass** im Kolben (42) und/oder im Kraftübertragungsteil (43) eine Anschlageinheit (54) untergebracht ist, die auf der dem Kraftübertragungsteil (43) abgewandten Seite mit einer Anschlagpartie (56) axial aus dem Kolben (42) herausragt, die mit einer gegenüberliegenden gehäusefesten Gegenfläche (57) zusammenarbeiten kann, um eine Endlage des Kolbens (42) vorzugeben.

17. Linearantriebseinheit nach Anspruch 16, **dadurch gekennzeichnet, dass** die Anschlagpartie (56) zur Vorgabe unterschiedlicher Kolbenendlagen relativ zum Kolben (42) bzw. Kraftübertragungsteil (43) axial variabel positionierbar ist.

18. Linearantriebseinheit nach Anspruch 17, **dadurch gekennzeichnet, dass** das Kraftübertragungsteil (43) an seinem dem Kolben (42) entgegengesetzten Ende eine Öffnung (63) aufweist, die das Einführen eines zur Positionierung der Anschlagpartie (56) dienenden Einstellwerkzeuges ermöglicht.

19. Linearantriebseinheit nach einem der Ansprüche 16 bis 18, **dadurch gekennzeichnet, dass** die Anschlageinheit (54) eine Pufferungs- und/oder Dämpfungseinrichtung (65) beinhaltet.

20. Linearantriebseinheit nach Anspruch 19, **dadurch gekennzeichnet, dass** die Pufferungs- und/oder Dämpfungseinrichtung (65) ein die Anschlagpartie (56) insbesondere koaxial durchsetzendes Krafteinleitungselement (67) aufweist.

21. Linearantriebseinheit nach einem der Ansprüche 1 bis 20, **dadurch gekennzeichnet, dass** das Querteil (34a, 34b) platten- oder klotzartig ausgebildet und mit zur Längsachse (12) des ersten Basiskörpers (2) rechtwinkelig orientierter Ausdehnungsebene zwischen die beiden Schenkel (5a, 5b) des Profilteils (4) eingegliedert ist.

22. Linearantriebseinheit nach einem der Ansprüche 1 bis 21, **dadurch gekennzeichnet, dass** das Querteil (34a, 34b) in der Querrichtung (9) des Profilteils (4) schwimmend am Profilteil (4) gelagert ist.

23. Linearantriebseinheit nach einem der Ansprüche 1 bis 22, **gekennzeichnet durch** einen im Vergleich zur Baulänge des ersten Basiskörpers (2) kürzeren zweiten Basiskörper (3), der an beiden einander entgegengesetzt orientierten Stirnseiten (17a, 17b) vom ersten Basiskörper (2) überragt wird, wobei an beiden axialen Endbereichen (18a, 18b) des ersten Basiskörpers (2) eine Antriebseinrichtung angreift.

## Claims

1. Linear drive unit with a first base body (2) containing a profile section (4), U-shaped in cross-section, and having a second base body (3) with a housing (drive housing 7) placed in the area of the U-opening of the profile section (4) with the interconnection of linear guide means (14) facilitating a guided linear relative movement, and with at least one drive chamber (8a, 8b) inside the drive housing (7) containing elements of a drive unit (16a, 16b) which extends outwards from at least one end face of the second base body (3) and acts on the assigned axial end section (18a, 18b) of the first base body (2), and on activation of which the linear relative movement between the two base bodies (2, 3) is generated, wherein the profile section (4) of the first base body (2) overlaps the drive housing (7) of the first base body (2) in the manner of a rider, so that its long-side legs (5a, 5b) flank the side faces (13a, 13b) of the drive housing (7), wherein the linear guide means (14) are located between each leg (5a, 5b) of the profile section (4) and the opposing side faces (13a, 13b) of the drive housing (7), and the profile section (4) is comprised of two profile elements (23a, 23b), each containing one of the legs (5a, 5b), placed alongside one another and firmly joined together with setting of the guidance play of the linear guide means (14), **characterised in that** the drive unit or units (16a, 16b) act on a transverse element (34a, 34b) extending in a transverse direction (9) of the profile section (4) between the two legs (5a, 5b) of the profile section (4) and anchored at both legs (5a, 5b), and that the transverse element (34a, 34b) engages positively with the two legs (5a, 5b) of the profile section (4) in such a way that a transfer of force free from play is possible between it and the profile section (4) in the directions of movement (15) of the linear relative movement, wherein at the same time during assembly of the profile elements (23a, 23b) and/or after the rigid joining together of the same, there is freedom of movement between the transverse element (34a, 34b) and the legs (5a, 5b) in the transverse direction (9).

2. Linear drive unit according to claim 1, **characterised in that** the two profile elements (23a, 23b) are firmly joined together by bonding.

3. Linear drive unit according to claim 1 or 2, **characterised in that** the linear guide means (14) are in the form of roller guides, with guide tracks provided on each leg (5a, 5b) of the profile section (4) and on the opposing side faces (13a, 13b) of the drive housing (7), and interacting with interposed roller elements (28).

4. Linear drive unit according to any of claims 1 to 3, **characterised in that** the linear guide means (14) assigned to each leg (5a, 5b) have roller elements (28) combined to form roller units.

5. Linear drive unit according to any of claims 1 to 4, **characterised in that** the two profile elements (23a, 23b) are each made L-shaped in cross-section, and are firmly joined together with reciprocal overlapping of two first L-legs (24a, 24b).

6. Linear drive unit according to any of claims 1 to 5, **characterised in that** the end faces of the first L-legs (24a, 24b) oriented in the direction of overlap are not in contact with the other respective profile element

7. Linear drive unit according to any of claims 1 to 6, **characterised in that** the drive housing (7) contains two adjacent drive chambers (8a, 8b), one for each drive unit (16a, 16b), wherein the drive chambers (8a, 8b) lie expediently in a common plane running parallel to the plane of extension of the connecting web (6) of the profile section (4) which connects the two legs (5a, 5b).

8. Linear drive unit according to claim 7, **characterised in that** the two drive units (16a, 16b) act on opposite axial end sections of the first base body (2), with each drive unit (16a, 16b) acting on only one axial end section (18a, 18b).

9. Linear drive unit according to claim 7 or 8, **characterised in that** each drive unit (16a, 16b) is responsible for the generation of the linear relative movement in only one of the two possible directions of movement.

10. Linear drive unit according to any of claims 1 to 9, **characterised in that** the drive unit or units (16a, 16b) is/are in the form of an electrical drive unit or units.

11. Linear drive unit according to any of claims 1 to 9, **characterised in that** the drive unit or units (16a, 16b) is/are in the form of a fluid-actuated drive unit or units.

12. Linear drive unit according to claim 11, **characterised in that** the drive unit or units (16a, 16b) have a piston (42) mounted slidably in the assigned drive chamber (8a, 8b) and acting via a longitudinally-extending force transmission member (43) on the relevant axial end section (18a, 18b) of the first base body (2).

13. Linear drive unit according to claim 12, **characterised in that** in the drive chamber (8a, 8b) the piston (42) bounds on the side facing away from the force transmission member (43) a pressurisation chamber (45) which may be supplied, through the piston (42) and the force transmission member (43), with an actuating fluid in order to generate a linear relative movement between the two base bodies (2, 3).

14. Linear drive unit according to claim 12 or 13, **characterised in that** the force transmission member (43) is hollow throughout and is in particular tubular in shape.

15. Linear drive unit according to claim 14, **characterised in that** the piston (42) and the force transmission member (43) are preferably made as a one-piece unit in the manner of a plunger.

16. Linear drive unit according to claim 14 or 15, **characterised in that** there is accommodated in the piston (42) and/or in the force transmission member (43) a stop unit (54), which extends with a stop section (56) axially from the piston (42) on the side facing away from the force transmission member (43) and is able to work in conjunction with an opposing mating surface (57) fixed to the housing, in order to preset an end position of the piston (42).

17. Linear drive unit according to claim 16, **characterised in that** the stop section (56) is capable of axially variable positioning for presetting different piston end positions relative to the piston (42) and the force transmission member (43) respectively.

18. Linear drive unit according to claim 17, **characterised in that** the force transmission member (43), at that end of it opposite the piston (42), has an orifice (63) which allows the insertion of an adjustment tool used to position the stop section (56).

19. Linear drive unit according to any of claims 16 to 18, **characterised in that** the stop unit (54) contains a cushioning and/or damping device (65).

20. Linear drive unit according to claim 19, **characterised in that** the cushioning and/or damping device (65) has a force initiation element (67) which passes through the stop section (56), in particular coaxially.

21. Linear drive unit according to any of claims 1 to 20, **characterised in that** the transverse element (34a, 34b) is plate- or block-shaped, and is incorporated between the two legs (5a, 5b) of the profile section (4) with its plane of extension aligned at right-angles to the longitudinal axis (12) of the first base body (2).

22. Linear drive unit according to any of claims 1 to 21, **characterised in that** the transverse element (34a, 34b) floats on the profile section (4) in the transverse direction (9) of the profile section (4).

23. Linear drive unit according to any of claims 1 to 22, **characterised by** a second base body (3) with a shorter overall length than that of the first base body (2), and which is overlapped at the two end faces (17a, 17b) of the first base body (2) which are aligned opposite one another, wherein a drive unit acts on both axial end sections (18a, 18b) of the first base body (2).

## Revendications

1. Unité d'entraînement linéaire, comprenant un premier corps de base (2) contenant une partie profilée (4) en forme de U en section, un second corps de base (3), qui présente un boîtier (boîtier d'entraînement 7), qui est placé dans la zone de l'ouverture en U de la partie profilée (4) avec l'intercalage de moyens de guidage linéaire (14) permettant un déplacement relatif linéaire guidé, et comprenant au moins un espace d'entraînement (8a, 8b) à l'intérieur du boîtier d'entraînement (7), qui contient des composants d'un système d'entraînement (16a, 16b), lesquels dépassent sur au moins une face avant du second corps de base (3) et s'appliquent sur la zone d'extrémité (18a, 18b) axiale attribuée du premier corps de base (2), et lors de l'activation duquel est déclenché le déplacement relatif linéaire entre les deux corps de base (2, 3), la partie profilée (4) du premier corps de base (2) recouvrant le boîtier d'entraînement (7) du second corps de base (2) à la façon d'un cavalier, de sorte que ses branches (5a, 5b) côté longitudinal encadrent les faces latérales (13a, 13b) du boîtier d'entraînement (7), les moyens de guidage linéaire (14) étant disposés entre chaque branche (5a, 5b) de la partie profilée (4) et la surface latérale (13a, 13b) attribuée du boîtier d'entraînement (7), et la partie profilée (4) étant composée de deux éléments profilés (23a, 23b) contenant respectivement l'une des branches (5a, 5b), posés l'un près de l'autre côté longitudinal avec le réglage du jeu de guidage des moyens de guidage linéaire (14) et étant assemblés de façon fixe, **caractérisée en ce que** au moins un système d'entraînement (16a, 16b) s'applique sur une partie transversale (34a, 34b), s'étendant dans un sens transversal (9) de la partie profilée (4) entre les deux branches (5a, 5b) de la partie profilée et ancrée sur les deux branches (5a, 5b), et **en ce que** la partie transversale (34a, 34b) s'engage par complémentarité de forme avec les deux branches (5a, 5b) de la partie profilée (4) de telle sorte qu'une transmission de force sans jeu est possible entre cette partie et la partie profilée (4) dans les sens de déplacement (1 5) du déplacement relatif linéaire, un jeu de mouvement entre la partie transversale (34a, 34b) et les branches (5a, 5b) dans le sens transversal étant présent simultanément lors de l'assemblage des éléments de profilé (23a, 23b) et/ou après l'assemblage fixe des mêmes éléments.

2. Unité d'entraînement linéaire selon la revendication 1, **caractérisée en ce que** les deux éléments profilés (23a, 23b) sont assemblés de façon fixe par collage.

3. Unité d'entraînement linéaire selon la revendication 1 ou 2, **caractérisée en ce que** les moyens de guidage linéaire (14) sont conçus comme des guidages à roulement et disposent de glissières de guidage prévues sur chaque branche (5a, 5b) de la partie profilée (4) et sur les faces latérales (13a, 13b) attribuées du boîtier d'entraînement (7), lesquelles glissières agissent conjointement avec des éléments à roulement (28) intercalés.

4. Unité d'entraînement linéaire selon l'une quelconque des revendications 1 à 3, **caractérisée en ce que** les moyens de guidage linéaires (14) attribués à une branche (5a, 5b) respective disposent d'éléments à roulement (28) assemblés en unités à roulement.

5. Unité d'entraînement linéaire selon l'une quelconque des revendications 1 à 4, **caractérisée en ce que** les deux éléments profilés (23a, 23b) sont conçus respectivement avec une forme de L en section et sont assemblés de façon fixe avec un chevauchement réciproque de deux premières branches en L (24a, 24b).

6. Unité d'entraînement linéaire selon l'une quelconque des revendications 1 à 5, **caractérisée en ce que** les faces frontales, orientées dans le sens de chevauchement, des premières branches en L (24a, 24b) ne s'appuient pas sur l'autre élément profilé.

7. Unité d'entraînement linéaire selon l'une quelconque des revendications 1 à 6, **caractérisée en ce que** le boîtier d'entraînement (7) contient des espaces d'entraînement (8a, 8b) juxtaposés pour respectivement un système d'entraînement (16a, 16b), les espaces d'entraînement (8a, 8b) étant situés de préférence dans un plan commun, qui est agencé parallèlement au plan d'étirement de la nervure de liaison (6), reliant les deux branches (5a, 5b), de la partie profilée (4).

8. Unité d'entraînement linéaire selon la revendication 7, **caractérisée en ce que** les deux systèmes d'entraînement (16a, 16b) s'appliquent sur des zones d'extrémité axiales opposées du premier corps de base (2), chaque système d'entraînement (16a, 16b) s'engageant sur seulement une zone d'extrémité (18a, 18b) axiale.

9. Unité d'entraînement linéaire selon la revendication 7 ou 8, **caractérisée en ce que** chaque système d'entraînement (16a, 16b) est responsable de la génération du mouvement relatif linéaire dans seulement l'un des deux sens de déplacement possibles.

10. Unité d'entraînement linéaire selon l'une quelconque des revendications 1 à 9, **caractérisée en ce qu'**au moins un système d'entraînement (16a, 16b) est conçu comme un système d'entraînement électrique.

11. Unité d'entraînement linéaire selon l'une quelconque des revendications 1 à 9, **caractérisée en ce qu'**au moins un système d'entraînement (16a, 16b) est réalisé sous la forme d'une unité d'entraînement actionnée par fluide.

12. Unité d'entraînement linéaire selon la revendication 11, **caractérisée en ce qu'**au moins un système d'entraînement (16a, 16b) présente un piston (42) disposé de façon coulissante dans l'espace d'entraînement (8a, 8b) attribué, lequel piston s'applique par une partie de transmission de force (43) présentant un étirement longitudinal sur la zone d'extrémité (18a, 18b) axiale concernée du premier corps de base (2).

13. Unité d'entraînement linéaire selon la revendication 12, **caractérisée en ce que** le piston (42) délimite dans l'espace d'entraînement (8a, 8b) sur le côté opposé à la partie de transmission de force (43) une chambre d'alimentation (45), qui peut être alimentée avec un fluide d'actionnement à travers le piston (42) et la partie de transmission de force (43), afin de susciter un déplacement relatif linéaire entre les deux corps de base (2, 3).

14. Unité d'entraînement linéaire selon la revendication 12 ou 13, **caractérisée en ce que** la partie de transmission de force (43) est conçue de façon continue creuse et en particulier avec une forme tubulaire.

15. Unité d'entraînement linéaire selon la revendication 14, **caractérisée en ce que** le piston (42) et la partie de transmission de force (43) sont réalisés sous la forme d'un module de préférence d'une seule pièce à la façon d'un piston plongeur.

16. Unité d'entraînement linéaire selon la revendication 14 ou 15, **caractérisée en ce que** dans le piston (42) et/ou dans la partie de transmission de force (43) est logée une unité de butée (54), qui dépasse axialement du piston (42) sur le côté opposé à la partie de transmission de force (43) avec une partie de butée (56), qui peut coopérer avec une contre-surface (57) solidaire du boîtier et opposée, afin de prédéfinir une position finale du piston (42).

17. Unité d'entraînement linéaire selon la revendication 16, **caractérisée en ce que** la partie de butée (56) peut être positionnée de façon variable au plan axial pour prédéfinir différentes positions finales de piston par rapport au piston (42) et à la partie de transmission de force (43).

18. Unité d'entraînement linéaire selon la revendication 17, **caractérisée en ce que** la partie de transmission de force (43) présente sur son extrémité opposée au piston (42) une ouverture (63) qui permet l'introduction d'un outil de réglage servant au positionnement de la partie de butée (56).

19. Unité d'entraînement linéaire selon l'une quelconque des revendications 16 à 18, **caractérisée en ce que** l'unité de butée (54) contient un système d'amortissement et/ou d'atténuation (65).

20. Unité d'entraînement linéaire selon la revendication 19, **caractérisée en ce que** le système tampon et/ou d'amortissement (65) présente un élément d'introduction de force (67) traversant la partie de butée (56) en particulier de façon coaxiale.

21. Unité d'entraînement linéaire selon l'une quelconque des revendications 1 à 20, **caractérisée en ce que** la partie transversale (34a, 34b) est conçue en forme de plaque ou de bloc et est insérée avec le plan d'extension orienté perpendiculairement par rapport à l'axe longitudinal (12) du premier corps de base (2) entre les deux branches (5a, 5b) de la partie profilée (4).

22. Unité d'entraînement linéaire selon l'une quelconque des revendications 1 à 21, **caractérisée en ce que** la partie transversale (34a, 34b) est logée dans le sens transversal (9) de la partie profilée (4) de façon flottante sur la partie profilée (4).

23. Unité d'entraînement linéaire selon l'une quelconque des revendications 1 à 22, **caractérisée par** un second corps de base (3) plus court par rapport à la longueur de construction du premier corps de base (2), qui est dépassé par le premier corps de base (2) sur les deux faces avant (17a, 17b) orientées dans le sens contraire réciproquement, un système d'entraînement s'appliquant sur les deux zones d'extrémité (18a, 18b) axiales du premier corps de base (2).
